**Europäisches Patentamt**

**European Patent Office**

**Office européen des brevets**

(19)

(11) Veröffentlichungsnummer: **0 099 996**
**B1**

(12) # EUROPÄISCHE PATENTSCHRIFT

(45) Veröffentlichungstag der Patentschrift:
23.09.87

(51) Int. Cl.⁴: **A 47 J 39/02**, B 65 G 1/06

(21) Anmeldenummer: **83106376.3**

(22) Anmeldetag: **30.06.83**

(54) Apparat zum Erwärmen von stapelbarem Essgeschirr.

(30) Priorität: **21.07.82 CH 4439/82**

(43) Veröffentlichungstag der Anmeldung:
**08.02.84 Patentblatt 84/6**

(45) Bekanntmachung des Hinweises auf die Patenterteilung:
**23.09.87 Patentblatt 87/39**

(84) Benannte Vertragsstaaten:
**AT BE DE FR GB IT LU NL**

(56) Entgegenhaltungen:
**CH-A-430 087**
**CH-A-473 572**
**DE-B-1 188 254**
**US-A-2 477 239**
**US-A-2 707 142**
**US-A-3 033 633**
**US-A-3 167 369**
**US-A-3 752 549**
**US-A-4 108 518**

(73) Patentinhaber: **Lükon Fabrik für elektrothermische Apparate und elektrische Stabheizkörper Paul Lüscher, CH- 2575 Täuffelen (CH)**

(72) Erfinder: **Lüscher, Paul, Burrirain 52, CH- 2575 Täuffelen (CH)**

(74) Vertreter: **Ryffel, Rolf, c/o Hepp Ryffel AG Bahnhofstrasse 58, CH- 8001 Zürich (CH)**

## Beschreibung

Die Erfindung bezieht sich auf einen Apparat zum Erwärmen von stapelbarem Essgeschirr mit einem schachtartigen, beheizbaren Gehäuse mit offener Oberseite, die mit einem Deckel verschliessbar ist.

In einem bekannten Apparat dieser Art, siehe DE-B-1 188 254, ist ein Träger für einen Geschirrstapel auf dem Boden des Gehäuses befestigt. Das Gehäuse weist zwei seitliche, schlitzförmige, durch Schieber verschliessbare Öffnungen auf, die sich über die ganze Höhe des Gehäuses erstrecken. Durch diese Öffnungen kann mit beiden Händen ein Geschirrstapel beim Beschicken oder Entnehmen erfasst werden.

Andere bekannte Tellerwärmer besitzen schrankförmige Gehäuse mit Türen auf einer oder auf zwei Seiten. Tellerwärmer mit runden oder Dieleckigen, schachtartigen Gehäusen mit im Zentrum gelagerten Rundtüren sind ebenfalls auf dem Markt.

Bei allen diesen bekannten Konstruktionen ist nachteilig, dass das Bedienungspersonal bei auf dem Fussboden stehenden Apparaten sich bücken oder in die Kniebeuge gehen muss oder bei auf einem Tisch stehenden Apparaten je nach der Höhe des Geschirrstapels hoch nach oben greifen muss, um den Apparat zu beschicken oder Geschirr daraus zu entnehmen. Zudem muss vor dem Beschicken oder Entnehmen der Deckel oder die Tür des Gehäuses von Hand geöffnet werden und nach dem Beschicken oder Entnehmen wieder von Hand geschlossen werden. Wenn das Schliessen des Deckels bzw. der Tür aus Bequemlichkeit unterbleibt, insbesondere wenn die Bedienungsperson eben mehrere gestapelte Geschirrstücke entnommen hat und mit beiden Händen festhält, dann ergeben sich unerwünschte Wärmeverluste.

Die Aufgabe der Erfindung besteht darin, einen Apparat der eingangs angegebenen Gattung derart auszugestalten, dass die geschilderten Nachteile vermieden werden, der Apparat bequem bedienbar ist und unnötige Wärmeverluste ausgeschlossen werden.

Bei Tellerstaplern ist schon vorgeschlagen worden, unterschiedliches Bücken oder Strecken je nach Höhe des Tellerstapels durch Verwendung von Federn zu vermeiden, die durch den Tellerstapel zusammengedrückt werden. Bei der Entnahme von Tellern werden die Federn entlastet und drücken die restlichen Teller bis zum Gewichtsausgleich nach oben. Dadurch soll das obere Ende des Tellerstapels stets annähernd auf gleicher Höhe liegen. Mit dieser Einrichtung ist es jedoch nicht möglich, den Ausgleich vollkommen zu erreichen. Selbst Teller vom gleichen Typ haben unterschiedliche Gewichte. Daher werden, wenn man die Einrichtung in einem schachtartigen Gehäuse mit offener Oberseite anordnet, stets einige Teller über den Öffnungsrand hinausragen. Ein Verschliessen mit einem Deckel ist daher nicht möglich. Der Tellerstapler könnte nicht als Tellerwärmer ausgestaltet werden, weil die Wärmeverluste viel zu hoch wären.

Weiter ist aus der DS-A-3 167 369 ein Tellerstapler bekannt, in welchem der Tellerstapel in einem schachtartigen Gehäuse auf einem Träger steht, der mittels eines Elektromotors heb- und senkbar ist. Im Betrieb wird der Elektromotor jeweils nach dem Entnehmen eines Tellers automatisch zum Heben des Trägers eingeschaltet, bis das obere Ende des Tellerstapels wieder bei einem oberen Endschalter steht.

Eine solche Einrichtung könnte an sich in einem Apparat der eingangs angegebenen Gattung verwendet werden, um ein unterschiedliches Bücken oder Strecken je nach Höhe des Tellerstapels unnötig zu machen. Der Deckel des Apparates müsste dann aber nach wie vor- mit den beschriebenen Nachteilen - jeweils von Hand geöffnet und geschlossen werden.

Der erfindungsgemässe Apparat, mit dem die angegebene Aufgabe gelöst wird, ist gekennzeichnet durch einen in dem Gehäuse angeordneten, heb- und senkbaren Träger für einen Geschirrstapel und motorgetriebene Einrichtungen zum Heben und Senken des Trägers und zum Öffnen und Schliessen des Deckels, mit einem Antriebsmittel, das über einen ersten Stromkreis mittels eines manuellen Druckknopfschalters zum Heben des Trägers elektrisch betätigbar ist und über einen zweiten Stromkreis zum Senken des Trägers elektrisch betätigbar ist, wobei im zweiten Stromkreis ein Schalter Angeordnet ist, der von einem Zeitverzögerungsmittel, das beim durch Betätigen des manuellen Druckknopfschalters bewirkten Heben des Trägers auslösbar ist, nach Ablauf einer vorbestimmten Zeitspanne geschlossen wird, und wobei im zweiten Stromkreis ein weiterer Schalter angeordnet ist, der von einer Fühlereinrichtung geöffnet wird, nachdem ein auf dem Träger stehender Geschirrstapel in das Gehäuse hineingesenkt ist, welcher weitere Schalter ein Umschalter ist, der einen Stromkreis zu einem Deckelschliess-Antriebsmittel schliesst, um dieses zu betätigen.

Der erfindungsgemässe Apparat ist sehr einfach und bequem zu bedienen. Für das Entnehmen von Geschirrstücken braucht die Bedienungsperson nur den Druckknopfschalter zu drücken, bis das Antriebsmittel den Träger mit dem darauf stehenden Geschirrstapel auf eine gewünschte Höhe gehoben hat, wobei eine gewünschte Anzahl Geschirrstücke sich über dem oberen Rand des Gehäuses befinden und mit beiden Händen erfasst werden können. Die Bedienungsperson entnimmt dann die Geschirrstücke und braucht weiter gar nichts vorzukehren. Nach Ablauf einer vorbestimmten Zeitspanne schliesst das Zeitverzögerungsmittel den erstgenannten Schalter im zweiten Stromkreis, so dass der Träger mit dem verbliebenen Geschirrstapel selbsttätig in das Gehäuse hineingesenkt wird. Die Fühlereinrichtung betätigt dann den Umschalter, der das Antriebsmittel ausschaltet und das Deckelschliess-Antriebsmittel einschaltet, so dass der Deckel selbsttätig geschlossen wird. Jeder unnötige Wärmeverlust wird so automatisch mit Sicherheit vermieden.

Ein Ausführungsbeispiel der Erfindung wird nachstehend anhand der Zeichnungen näher erläutert. In diesen zeigen:

Fig. 1 einen Tellerwärmer ohne die äussere Verschalung in Vorderansicht,

Fig. 2 den Tellerwärmer in Seitenansicht und

Fig. 3 das elektrische Schaltschema des Tellerwärmers.

Der dargestellte Tellerwärmer besitzt ein Gestell mit einem quadratischen unteren horizontalen Rahmen 1 und einer oberen horizontalen Rahmenplatte 2, deren Umriss ebenfalls quadratisch ist. Der Rahmen 1 ist mit der Platte 2 auf beiden Seiten über je zwei vertikale Führungsschienen 3, 4 bzw. 5, 6 verbunden. Der untere Rahmen 1 steht auf Stützen 7, welche zweckmässig Laufrollen tragen können (nicht dargestellt). Die äussere Verschalung des Tellerwärmers, mit vier vertikalen Wänden, ist in der Zeichnung weggelassen worden.

In dem Gestell 1, 2, 3, 4, 5, 6 ist ein kreiszylindrisches, schachtartiges wärmeisoliertes Innengehäuse 8 angeordnet, dessen Oberseite offen ist, so dass der Innenraum des Gehäuses 8 durch eine kreisrunde Öffnung 9 in der Rahmenplatte 2 hindurch zugänglich ist. Für die elektrische Beheizung des Innenraumes des Gehäuses 8 sind in demselben zwei einander gegenüberliegende, vertikal an der Gehäusewand in Ausbuchtungen montierte elektrische Heizstäbe 10 angeordnet.

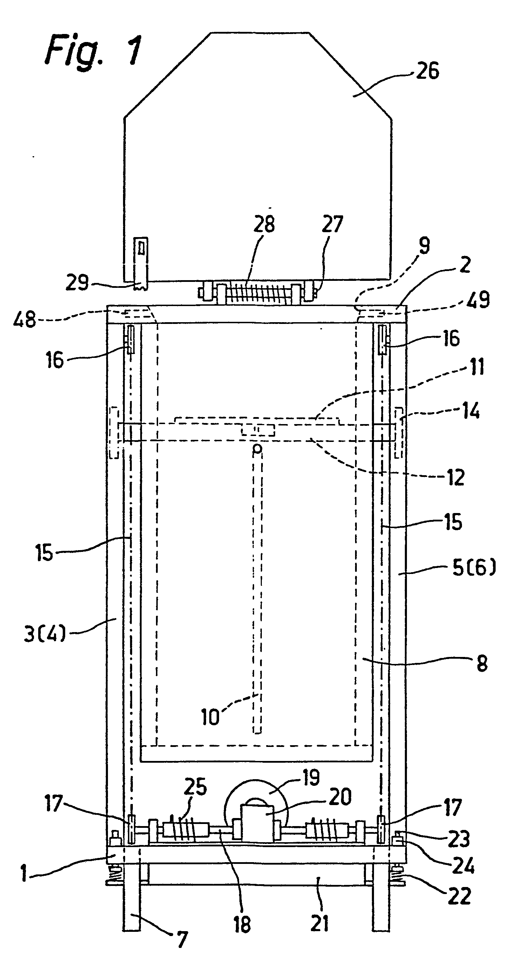

In dem Gehäuse 8 befindet sich eine horizontale Trägerplatte 11, die einen Stapel von zu wärmenden Tellern (nicht dargestellt) trägt. Die Trägerplatte 11 ist auf einen Schlitten oder Wagen 12 aufgesteckt; sie kann zum Reinigen des Gehäuseinneren, z. B. mit einem Staubsaugerschlauch, abgenommen werden. Seitliche Arme des Schlittens bzw. Wagens 12 erstrecken sich durch zwei schmale Schlitzöffnungen 13 hindurch, die in der Umfangswand des Gehäuses 8 einander gegenüberliegend ausgebildet sind und sich vertikal über dessen ganze Nutzhöhe erstrecken. Die Enden dieser Arme sind in den Führungsschienen 3, 4 bzw. 5, 6 vertikal verschiebbar geführt, z. B. mittels von Kunststoff-Gleitschuhen 14. Ferner sind die Enden der Arme je an einer von zwei endlosen Gelenkketten 15 festgeschraubt, die ausserhalb des Gehäuses 8 in vertikalen Ebenen umlaufen. Die Ketten 15 laufen oben über frei drehbare Kettenräder 16 und unten über Antriebskettenräder 17, welche auf Antriebswellen 18 (Fig. 1) sitzen, die von einem Antriebs-Elektromotor 19 über ein Getriebe 20 gedreht werden können.

Die Antriebseinheit mit den Kettenrädern 17, den Wellen 18, dem Motor 19 und dem Getriebe 20 ist auf einer Grundplatte 21 montiert. Diese Grundplatte 21 wird von verstellbaren Druckfedern 22 nach unten gedrückt, wodurch die Ketten 15 gespannt werden. Die Spannschrauben 23 der Druckfedern 22 laufen in Gewindebüchsen 24, die mit dem unteren Rahmen 1 verschweisst sind.

Durch Rechts- oder Linkslauf des Motors 19 werden die mit dem Wagen bzw. Schlitten 12 verbundenen Stränge der Ketten 15 nach oben oder nach unten bewegt. Auf den beiden Antriebswellen 18 sind Spiralblattfedern 25 so montiert, dass sie bei der Abwärtsbewegung der mit dem Wagen bzw. Schlitten 12 verbundenen Kettenstränge aufgezogen werden. Beim Aufwärtsfahren des Wagens bzw. Schlittens 12 unterstützen diese Federn 25 den Antriebsmotor 19 beim Heben des auf der Trägerplatte 1 aufgestellten Tellerstapels.

Die in der oberen Rahmenplatte 2 ausgebildete, nach oben schräg auslaufende obere Zugangsöffnung 9 zum Gehäuse 8 ist durch einen sich automatisch schliessenden und öffnenden, wärmeisolierten Deckel 26 verschliessbar. Der Deckel 26 ist um eine Achse 27 schwenkbar, auf der eine vorgespannte Torsionsfeder 28 angeordnet ist, welche den Deckel in seine Offenstellung drückt. Ferner ist am Deckel 26 auf einer Seite ein Rohr 29 angelenkt, das sich durch eine schlitzförmige Aussparung in der oberen Rahmenplatte 2 hindurch nach unten erstreckt und dort teleskopartig auf einer Zugstange 30 geführt ist, welche an einer Kurbel 31 eines Getriebemotors 32 angelenkt ist. Auf dem unteren Ende des Rohres 29 ist ein Blinkensattel 33 befestigt. Eine mit diesem zusammenwirkende, mittels eines Elektromagneten 34 zurückziehbare Klinke 35 ist zusammen mit dem Elektromagneten auf der Zugstange 30 so befestigt, dass bei geschlossenem Deckel 26 die Klinke 35 über dem Klinkensattel 33 einrastet und den Deckel 26 bei abwärts gerichtetem Kurbelarm 31 geschlossen hält.

Durch Erregung des Elektromagneten 34 kann dann die Klinke 35 zurückgezogen werden, so dass der Deckel 26 durch die Kraft der Feder 28 aufspringt. Zur Dämpfung der Aufwärtsbewegung ist am Rohr 29 ein federnder Anschlag 36 angebracht, der den Aufwärtsschwung des Deckels 26 an der Unterseite der Rahmenplatte 2 federnd abfängt.

Wenn bei geöffnetem Deckel 26 der Getriebemotor 32 zu laufen beginnt, wird durch die Kurbelbewegung der Elektromagnet 34 mit der Klinke 35 nach oben bewegt, bis die Klinke 35 über dem Klinkensattel 33 einrastet. Durch den Abwärtsgang der Kurbel 31 wird der Deckel 26 dann nach unten gezogen und ist bei abwärtsgerichtetem Kurbelarm 31 wieder geschlossen. Eine Sperrklinke 37 verhindert das Hochziehen des Kurbelarmes 31 durch die Torsionsfeder 28 bei geschlossenem Deckel 26.

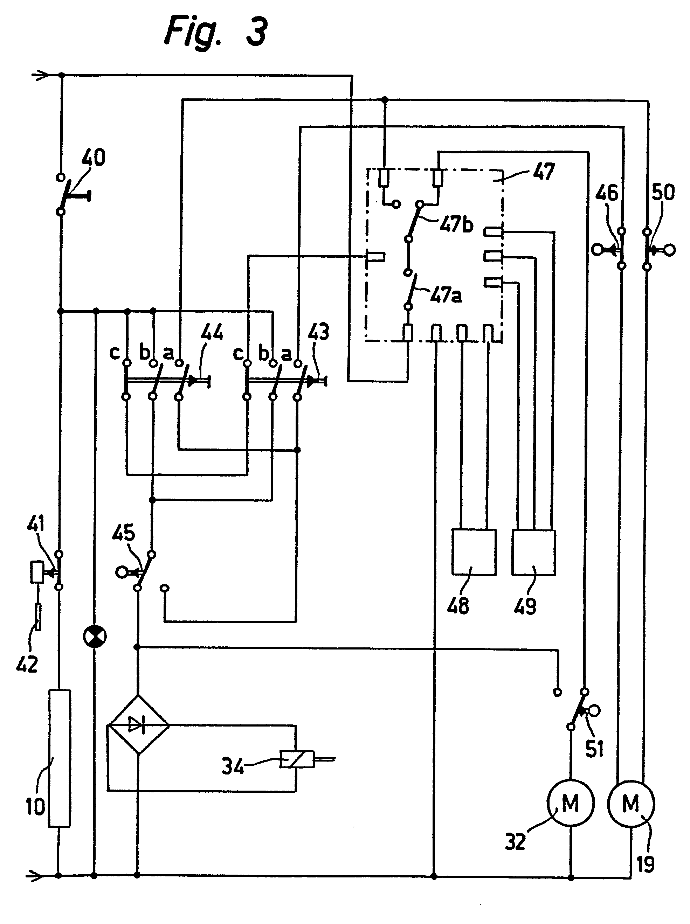

Die Funktion des Tellerwärmers wird nachstehend unter Bezugnahme auf die Fig. 3 erläutert, die ein elektrisches Schaltschema des Tellerwärmers zeigt.

Durch einen Hauptschalter 40 werden die Heizstäbe 10 eingeschaltet, wobei die Temperatur im Gehäuse 8 durch einen Thermostatschalter 41 mit zugeordnetem Temperaturfühler 42 geregelt wird.

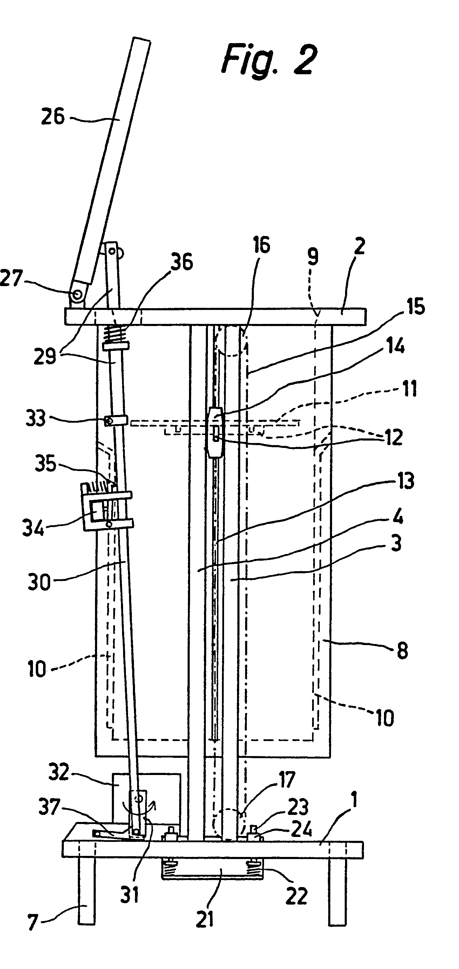

Auf der Oberseite der Rahmenplatte 2 sind zwei Druckknopfschalter 43 und 44 (in Fig. 1 und 2 nicht dargestellt) angeordnet, die zum Heben bzw. zum Senken der Trägerplatte 11 im Gehäuse 8 dienen. Die Druckknopfschalter 43 und 44 sind je mit zwei Schliesskontakten a und b und einem Öffnungskontakt c ausgerüstet.

Durch Drücken des Schalters 43 wird über dessen Kontakt b und über einen vom Deckel 26 bzw. vom Rohr 29 betätigten Endumschalter 45, der in der gezeichneten Stellung ist, solange der Deckel 26 nicht geöffnet ist, ein Stromkreis zu einem den Elektromagneten 34 speisenden Gleichrichter geschlossen. Der Elektromagnet 34 zieht die Klinke 35 zurück, so dass sich der Deckel 26 öffnet. Dabei schaltet der Endumschalter 45 den Elektromagneten 34 wieder aus und schliesst einen Stromkreis über den Kontakt a des Schalters 43 und einen oberen Hub-Endschalter 46 zum Antriebsmotor 19. Nachdem der Deckel 26 geöffnet ist, bewegt so der Motor 19 die Trägerplatte 11 mit dem darauf stehenden Tellerstapel nach oben, solange der Schalter 43 gedrückt ist (bzw. bis allenfalls der vom Schlitten bzw. Wagen 12 betätigte obere Hub-Endschalter 46 öffnet).

Der Öffnungskontakt c des Schalters 43 unterbricht ein Zeitrelais in einer Elektronikschaltung 47 und zieht es dadurch auf. Nach dem Loslassen des Schalters 43 läuft das Zeitrelais ab und schliesst nach einer vorbestimmten Zeitspanne einen Kontakt 47a in der Elektronikschaltung.

Eine mit der Elektronikschaltung 47 verbundene Infrarotschranke, mit einem Sender 48 und einem Empfänger 49, die beim oberen Ende der Umfangswand des Gehäuses 8 einander gegenüberliegend angeordnet sind (vgl. Fig. 1), tastet die obere Öffnung 9 des Gehäuses 8 ab. Wenn der Tellerstapel über den oberen Rand des Gehäuses 8 hinausragt, ist ein Schalter 47b aus der gezeichneten Stellung umgeschaltet und schliesst, vom Zeitrelaiskontakt 47a ausgehend, einen Stromkreis über einen unteren Hub-Endschalter 50 zum Antriebsmotor 19. Dieser bewegt die Trägerplatte 11 mit dem Tellerstapel abwärts, bis die Infrarotschranke 48, 49 frei ist. Dann schaltet der Umschalter 47b in der Elektronikschaltung 47 in die gezeichnete Stellung und schliesst über einen vom Deckel 26 betätigten Endumschalter 51, der in der gezeichneten Stellung ist, solange der Deckel 26 nicht geschlossen ist, einen Stromkreis zum Getriebemotor 32. Der Getriebemotor 32 beginnt zu drehen, und die Kurbel 31 schliesst in der bereits beschriebenen Weise den Deckel 26. Sobald der Deckel 26 geschlossen ist, schaltet er den Endumschalter 51 aus der gezeichneten Stellung um, wodurch der Motor 32 ausgeschaltet wird.

Der Getriebemotor 32 ist jetzt parallel zum Gleichrichter des Elektromagneten 34 geschaltet. Bei einer nächsten Betätigung des Druckknopfschalters 43 beginnt er daher kurz zu laufen, bis der Deckel 26 seine Schließstellung verlassen hat und der Endumschalter 51 wieder in die gezeichnete Stellung zurückschaltet. Der Motor 32 wirkt so als Ausklinkhilfe für den Magneten 34.

Der Druckknopfschalter 43 wird natürlich zur Auslösung der beschriebenen Abläufe betätigt, wenn Teller aus dem Tellerwärmer entnommen werden sollen.

Wenn der Tellerwärmer mit frischen Tellern beschickt werden soll, betätigt man den Druckknopfschalter 44. Dieser hat die gleiche Funktion wie der Schalter 43 mit der Ausnahme, dass nach dem Öffnen des Deckels 26 ein Stromkreis über den Endumschalter 45, den Kontakt a des Schalters 44 und den unteren Hub-Endschalter 50 zum Motor 19 derart geschlossen wird, dass dieser die Trägerplatte 11 im Gehäuse 8 senkt.

Die übrigen Abläufe, nach dem Loslassen des Druckknopfschalters 44, sind die gleichen wie vorstehend für den Druckknopfschalter 43 beschrieben.

Es ist klar, dass im vorstehenden anhand der Zeichnungen nur ein Auführungsbeispiel des erfindungsgemässen Essgeschirrwärmers beschrieben worden ist und dass zahlreiche Varianten möglich sind. Die Mittel zum Führen und Antreiben der im Gehäuse 8 heb- und senkbaren Trägerplatte 11 können in irgend einer geeigneten Weise ausgebildet sein. Dasselbe gilt auch für die Einrichtung zum Öffnen und Schliessen des Deckels. Die Einrichtung zum Heben und Senken der Trägerplatte 11 und die Einrichtung zum Öffnen und Schliessen des Deckels 26 könnten von einem gemeinsamen Antriebsmotor über schaltbare Kupplungen als Antriebsmittel angetrieben werden.

**Patentansprüche**

1. Apparat zum Erwärmen von stapelbarem Essgeschirr, mit einem schachtartigen, beheizbaren Gehäuse (8) mit offener Oberseite (9), die mit einem Deckel (26) verschliessbar ist, gekennzeichnet durch einen in dem Gehäuse (8) angeordneten, heb- und senkbaren Träger (11) für einen Geschirrstapel und motorgetriebene Einrichtungen (15 - 18, 28 - 31, 33 - 35) zum Heben und Senken des Trägers (11) und zum Öffnen und Schliessen des Deckels (26), mit einem Antriebsmittel (19, 20), das über einen ersten Stromkreis (43, 45, 46) mittels eines manuellen Druckknopfschalters (43) zum Heben des Trägers (11) elektrisch betätigbar ist und über einen zweiten Stromkreis (47, 50) zum Senken des Trägers (11) elektrisch betätigbar ist, wobei im zweiten Stromkreis (47, 50) ein Schalter (47a) angeordnet ist, der von einem Zeitverzögerungsmittel, das beim durch Betätigen des manuellen Druckknopfschalters (43) bewirkten Heben des Trägers (11) auslösbar ist, nach Ablauf einer vorbestimmten Zeitspanne geschlossen wird, und wobei im zweiten Stromkreis (47, 50) ein weiterer Schalter (47b) angeordnet ist, der von einer Fühlereinrichtung (48, 49) geöffnet wird, nachdem ein auf dem Träger (11) stehender Geschirrstapel in das Gehäuse (8) hineingesenkt ist, welcher weitere Schalter (47b) ein Umschalter ist, der einen Stromkreis zu einem Deckelschliess-Antriebsmittel (32) schliesst, um dieses zu betätigen.

2. Apparat nach Anspruch 1, dadurch gekennzeichnet, dass der Deckel (26) in eine Offenstellung federbelastet ist und über eine Zugstange (29) in Schliesstellung bringbar ist.

3. Apparat nach Anspruch 2, dadurch gekennzeichnet, dass die Zugstange (29) über eine lösbare Klinkenkupplung (33 - 35) mit einer zweiten Zugstange (30) gekuppelt ist, die an einem Kurbelarm (31) des Deckelschliess-Antriebsmittels (32) angelenkt ist.

4. Apparat nach einem der Ansprüche 1 bis 3, dadurch gekennzeichnet, dass im ersten Stromkreis (43, 45, 46) ein Endschalter (45) angeordnet ist, der vom in Offenstellung befindlichen Deckel (26) geschlossen wird.

5. Apparat nach einem der Ansprüche 1 bis 4, dadurch gekennzeichnet, dass die Fühlereinrichtung (48, 49) eine Lichtschranke ist, die beim oberen Rand (9) des Gehäuses (8) angeordnet ist, um den Durchtritt des oberen Endes eines auf dem Träger (11) stehenden Geschirrstapels festzustellen.

6. Apparat nach einem der Ansprüche 1 bis 5, dadurch gekennzeichnet, dass der Träger (11) auf einem Wagen oder Schlitten (12) angeordnet ist, der an vertikalen Führungsschienen (3 - 6) bewegbar geführt ist.

7. Apparat nach einem der Ansprüche 1 bis 6, dadurch gekennzeichnet, dass der Träger (11) mit wenigstens einer Kette (15) in Antriebsverbindung steht, die um ein Kettenrad (17) läuft, welches durch das Antriebsmittel (19, 20) drehbar ist.

## Claims

1. Apparatus for heating stackable dishes, including a heatable housing (8) with an open top (9) which can be closed with a cover (26), characterized by a support (11) for a stack of dishes, arranged in the housing (8) and adapted to be raised and lowered, and power-driven means (15 - 18, 28 - 31, 33 - 35) for raising and lowering the support (11) and for opening and closing the cover (26), including a drive means (19, 20) which, via a first circuit (43, 45, 46) and by means of a manual push-button switch (43), is electrically controllable for raising the support (11) and which, via a second circuit (47, 50), is electrically controllable for lowering the support, said second circuit (47, 50) including a switch (47a) which is closed after a predetermined time interval by time delay means started when the support (11) is raised by operation of the manual push-button switch (43), and said second circuit (47, 50) also including a further switch (47b) which is opened by a sensing arrangement (48, 49) when a stack of dishes resting on the support (11) has been lowered into the housing (8), said further switch (47b) being a double throw switch which closes a circuit to a cover closing drive means (32) for actuating the same.

2. Apparatus according to claim 1, characterized in that the cover (26) is spring-biassed toward an open position and is movable to the closed position by means of a tie rod (29).

3. Apparatus according to claim 2, characterized in that the tie rod (29) is coupled by a releasable latch coupling (33 - 35) to a second tie rod (30) which is pivotably connected to a crank arm (31) of the cover closing drive means (32).

4. Apparatus according to any one of claims 1 to 3, characterized in that the first circuit (43, 45, 46) includes a limit switch (45) which is closed by the cover (26) in an open position thereof.

5. Apparatus according to any one of claims 1 to 4, characterized in that the sensing arrangement (48, 49) comprises a photocell system including a light source and a detector, said photocell system being arranged at the upper edge (9) of the housing (8) for detecting the passage of the top of a stack of dishes resting on the support (11).

6. Apparatus according to any one of claims 1 to 5, characterized in that the support (11) is mounted on a carriage (12) which is movably guided on vertical guide rails (3 - 6).

7. Apparatus according to any one of claims 1 to 6, characterized in that the support (11) is drivingly linked to at least one chain (15) which passes over a sprocket (17), the drive means (19, 20) being adapted to rotate this sprocket.

## Revendications

1. Appareil pour chauffer de la vaisselle empilable, comportant un capot chauffable (8), semblable à un puits, dont la face supérieure ouverte (9) peut être fermée par un couvercle (26), caractérisé par un support (11) pour de la vaiselle empilée, pouvant monter et descendre dans le capot (8), et par des dispositifs motorisés (15-18, 28-31, 33-35) pour élever et abaisser le support (11) et pour ouvrir et fermer le couvercle (26), comprenant des moyens d'entraînement (19, 20) qui peuvent être activés électriquement par un premier circuit électrique (43, 45, 46), au moyen d'un interrupteur manuel à bouton-poussoir (43) pour élever le support (11), et par un second circuit (47, 50) pour abaisser le support (11) par voie électrique, le second circuit (47, 50) renfermant un interrupteur (47a) qui est fermé par un dispositif temporisé, déclenché par l'ascension du support (11) résultant de l'actionnement de l'interrupteur manuel à bouton-poussoir (43), au terme d'un intervalle de temps prédéterminé, le second circuit (47, 50) renfermant un autre interrupteur (47b) qui peut être ouvert par un dispositif de détection (48, 49) après qu'une pile de vaisselle placée sur le support (11) est descendue dans le capot (8), cet autre interrupteur (47b) étant un commutateur qui ferme un circuit aboutissant à des moyens d'actionnement (32) commandant la fermeture du couvercle, pour activer ces moyens.

2. Appareil selon la revendication 1, caractérisé en ce que le couvercle (26) est sollicité à s'ouvrir par un ressort et peut être fermé au moyen d'une tige de traction (29).

3. Appareil selon la revendication 2, caractérisé en ce que la tige de traction (29) est reliée par un accouplement à cliquet libérable (33-35) à une seconde tige de traction (30) qui est articulée à un corps de manivelle (31) des moyens d'actionnement (32) commandant la fermeture du couvercle.

4. Appareil selon l'une quelconque des revendications 1 à 3, caractérisé en ce que le premier circuit (43, 45, 46) renferme un interrupteur de fin de course (45) qui est fermé par le couvercle (26) quand celui-ci est dans sa position ouverte.

5. Appareil selon l'une quelconque des revendications 1 à 4, caractérisé en ce que le dispositif de détection (48, 49) est une barrière photo-électrique montée près du bord supérieur (9) du capot (8) afin de constater le passage de l'extrémité supérieure d'une pile de vaisselle placée sur le support (11).

6. Appareil selon l'une quelconque des revendication 1 à 5, caractérisé en ce que le support (11) est monté sur un chariot ou sur un traîneau (12) dont les déplacements sont guidés par des glissières ou des rails verticaux (3-6).

7. Appareil selon l'une quelconque des revendications 1 à 6, caractérisé en ce que le support (11) est relié à, au moins, une chaîne (15) passant autour d'une roue de chaîne (17) qui peut être entraînée en rotation par les moyens d'entraînement (19, 20).

Fig. 1

# Fig. 2

# Fig. 3